# EUROPEAN PATENT SPECIFICATION

(11) **EP 4 148 833 B1**
(45) Date of publication and mention of the grant of the patent: **18.02.2026**
(21) Application number: 21856180.1
(22) Date of filing: 10.08.2021
(51) Int. Cl.: H01M 4/62, H01M 4/13, H01M 4/36, H01M 4/38, H01M 10/052, H01M 4/02, H01M 4/587, H01M 4/133

(54) **POSITIVE ELECTRODE BINDER FOR LITHIUM SECONDARY BATTERY, AND LITHIUM SECONDARY BATTERY POSITIVE ELECTRODE AND LITHIUM SECONDARY BATTERY COMPRISING SAME**
POSITIVELEKTRODENBINDEMITTEL FÜR LITHIUMSEKUNDÄRBATTERIE SOWIE LITHIUMSEKUNDÄRBATTERIEPOSITIVELEKTRODE UND LITHIUMSEKUNDÄRBATTERIE DAMIT
LIANT D'ÉLECTRODE POSITIVE POUR BATTERIE SECONDAIRE AU LITHIUM ET ÉLECTRODE POSITIVE DE BATTERIE SECONDAIRE AU LITHIUM AINSI QUE BATTERIE SECONDAIRE AU LITHIUM LA COMPRENANT

(30) Priority: 11.08.2020 KR 20200100226
(43) Date of publication of application: 15.03.2023
(73) Proprietor: LG Energy Solution, Ltd., Seoul 07335 (KR); Seoul National University R & DB Foundation, Seoul 08826 (KR)
(72) Inventor: KIM, Soohyun, Daejeon 34122 (KR); LEE, Jong-Chan, Seoul 08830 (KR); CHOI, Seokin, Daejeon 34122 (KR); SOHN, Kwonnam, Daejeon 34122 (KR); HONG, Dong Gi, Seoul 08792 (KR); BAIK, Ji-Hoon, Daejeon 34116 (KR); LEE, Jin Hong, Busan 46294 (KR)
(74) Representative: Goddar, Heinz J.
(86) International application number: PCT/KR2021/010544
(87) International publication number: WO 2022/035174

(56) References cited:
- WO-A1-2020/081639
- WO-A1-2020/081639
- CN-A- 111 490 249
- KR-A- 20010 033 272
- KR-A- 20140 046 987
- KR-A- 20160 033 692
- KR-A- 20160 033 692
- US-A- 4 322 331
- GROTHE DORIAN C. ET AL: "Acrylate Functionalized Tetraalkylammonium Salts with Ionic Liquid Properties", MOLECULES, vol. 17, no. 6, 1 January 2012 (2012-01-01), DE, pages 6593 - 6604, XP093091877, ISSN: 1433-1373, DOI: 10.3390/molecules17066593
- ZHOU NING ET AL: "Star-shaped multi-arm polymeric ionic liquid based on tetraalkylammonium cation as high performance gel electrolyte for lithium metal batteries", ELECTROCHIMICA ACTA, vol. 301, 1 April 2019 (2019-04-01), AMSTERDAM, NL, pages 284 - 293, XP093091794, ISSN: 0013-4686, DOI: 10.1016/j.electacta.2019.01.143

## Description

### [Technical Field]

The present invention relates to a positive electrode binder for a lithium secondary battery, and a positive electrode for a lithium secondary battery and a lithium secondary battery comprising the same, and more particularly, to a positive electrode binder for a lithium secondary battery capable of improving battery performance by being fully constituted only by a cationic monomer, and thus capturing lithium polysulfide that occurs during charging and discharging of the battery, and a positive electrode for a lithium secondary battery and a lithium secondary battery comprising the same.

### [Background Art]

With the growing interest in energy storage technology, as the application of energy storage technology extends to mobile phones, tablets, laptops, and camcorders, and further to electric vehicles (EVs) and hybrid electric vehicles (HEVs), research and development of electrochemical devices are gradually increasing. Electrochemical devices are the field that is receiving the most attention in this respect, and among them, the development of secondary batteries such as a lithium-sulfur battery capable of charging and discharging has been a focus of interest. In recent years, in order to increase the energy density in developing such a battery, research and development on the design of new electrodes and batteries has been conducted.

Among these electrochemical devices, a lithium-sulfur battery (Li-S battery) using lithium metal as a negative electrode and sulfur as a positive electrode has a higher theoretical capacity and energy density (typically about 2,500 Wh/kg) than conventional lithium-ion batteries, and is also economical because it uses sulfur, which is not only easy to get in nature, but also low price, as a positive electrode, and thus is in the spotlight as a next-generation secondary battery that can replace lithium-ion batteries. In such a lithium-sulfur battery, a reduction reaction of sulfur and an oxidation reaction of lithium metal occur during discharging. At this time, sulfur forms lithium polysulfide (LiPS) having a linear structure from S₈ having a ring structure. This lithium-sulfur battery is characterized by showing a stepwise discharging voltage until the polysulfide is completely reduced to Li₂S.

However, the biggest obstacle of the lithium-sulfur battery in the commercialization is the occurrence of large volume changes (-80%) during charging and discharging, and the leaching and shuttle phenomenon of the lithium polysulfide (LiPS, Li₂Sₓ) which occurs during charging and discharging in a battery using a sulfur-based compound as a positive electrode active material and an alkali metal such as lithium as a negative electrode active material. In other words, the biggest problem of the lithium-sulfur battery is that the lithium polysulfide generated by the positive electrode during charging and discharging is leaching into the liquid electrolyte, causing irreversible capacity reduction and side reaction in the negative electrode.

More specifically, lithium polysulfide, which is generated while sulfur used as a positive electrode is reduced during discharging, has high solubility in particular in ether-based liquid electrolytes, is small in size, and thus can pass through a separator, and when it meets lithium metal used as a negative electrode, it causes a side reaction to cause the problem of destabilizing the interface. As a result, the capacity is reduced due to the irreversible loss of the positive electrode active material and the lifetime of the battery is reduced due to the deposition of sulfur particles on the surface of the lithium metal due to side reactions. Therefore, there is a need for a technology that can prevent lithium polysulfide generated from the positive electrode from leaching into the liquid electrolyte during battery operation.

CN 111 490 249 A relates to a positive electrode material for the positive electrode of a lithium-sulfur battery. The positive electrode material comprises a cationic binder being a cationic acrylamide copolymer.

WO 2020/081 639 A1 discloses aqueous binder compositions for an electrode of a lithium ion battery comprising a cationic copolymer.

KR 2016 0033692 A discloses a binder for electrical storage devices containing a repeating unit derived from (meth)acrylamide and a water-soluble polymer (A). The water-soluble polymer (A) can be a mix of monomers including cationic monomers.

Dorian C. Grothe et al. "Acrylate Functionalized Tetraalkylammonium Salts with Ionic Liquid Properties", Molecules, Vol. 17, No. 6, 2012, pp. 6593-6604, relates to the synthesis of cationic (meth)acrylates and discloses cationic monomers having two quaternary nitrogen atoms in the same side-chain. The compounds may be useful for lithium secondary batteries but binders are not mentioned.

### [Disclosure]

### [Technical Problem]

Therefore, it is an object of the present invention to provide a positive electrode binder for a lithium secondary battery, which is capable of improving battery performance by being fully constituted only by a cationic monomer, and thus capturing lithium polysulfide that occurs during charging and discharging of the battery, and a positive electrode for a lithium secondary battery and a lithium secondary battery comprising the same.

### [Technical Solution]

In order to achieve the above object, the present invention provides a positive electrode binder for a lithium secondary battery comprising a structural unit that is derived from a cationic (meth)acrylate-based monomer containing one or more cations.

In addition, the present invention provides a positive electrode for a lithium secondary battery comprising the positive electrode binder; and a positive electrode active material.

In addition, the present invention provides a lithium secondary battery comprising a positive electrode for a lithium secondary battery; a lithium metal negative electrode; an electrolyte interposed between the positive electrode and the negative electrode; and a separator.

### [Advantageous Effects]

According to the positive electrode binder for the lithium secondary battery according to the present invention, the positive electrode for the lithium secondary battery and the lithium secondary battery including the same, the present invention has the advantage of improving the performance of the battery by being fully constituted only by a cationic monomer, and thus capturing lithium polysulfide that occurs during charging and discharging of the battery.

### [Description of Drawings]

FIGs. 1 and 2 are reaction schemes showing a process of preparing a positive electrode binder for a lithium secondary battery according to an example of the present invention.
FIG. 3 is a graph showing the results of ¹H NMR analysis of a cationic monomer prepared through a nucleophilic substitution reaction according to an example of the present invention.
FIG. 4 is a graph showing the results of ¹³C NMR analysis of a cationic monomer prepared through an ion exchange reaction according to an example of the present invention.
FIG. 5 is a graph showing the results of ¹H NMR analysis of a cationic monomer prepared through a nucleophilic substitution reaction according to an example of the present invention.
FIG. 6 is a graph showing the results of ¹³C NMR analysis of a cationic monomer prepared through an ion exchange reaction according to an example of the present invention.
FIG. 7 is a graph comparing discharging capacity and lifetime characteristics of a lithium-sulfur battery according to an example of the present invention and comparative example.
FIG. 8 is a capacity-voltage graph of a lithium-sulfur battery according to an example of the present invention.
FIG. 9 is a capacity-voltage graph of a lithium-sulfur battery in which a conventional binder is applied to a positive electrode.

### [Best Model

As described above, in lithium secondary batteries, especially lithium-sulfur batteries, lithium polysulfide, which is generated while sulfur used as a positive electrode is reduced during discharge, has high solubility in ether-based liquid electrolytes, and due to its small size, can pass through the separator, and when coming in contact with lithium metal used as a negative electrode, causes side reactions, thereby causing problems such as destabilizing the interface, and as a result, the capacity is reduced due to irreversible loss of the positive electrode active material, and the lifetime of the battery is reduced due to the deposition of sulfur particles on the surface of the lithium metal by side reactions. Therefore, there is a need for a technology that can hold the lithium polysulfide generated from the positive electrode from leaching into the liquid electrolyte during the operation of the battery. Accordingly, the applicant of the present application has invented a positive electrode binder for a lithium secondary battery comprising only a cationic monomer, a positive electrode for a lithium secondary battery comprising the same, and a lithium secondary battery.

That is, since lithium polysulfide basically consists of lithium cation and polysulfide anion, it can easily interact with a polar functional group, and in particular, it is known to strongly interact with a positively charged functional group. Therefore, when positive charge or cation is introduced into the binder, there is an advantage that lithium polysulfide generated during the charging and discharging process can be caught, thereby improving battery performance. In addition, when a binder with a crosslinked structure is used, there is an advantage that it can reduce the volume change that occurs during the charging and discharging process, thereby helping to maintain the internal structure of the positive electrode (that is, providing structural stability).

Hereinafter, the positive electrode binder for the lithium secondary battery according to the present invention, the positive electrode for the lithium secondary battery including the same, and the lithium secondary battery will be described in detail.

### Positive electrode binder

The positive electrode binder for a lithium secondary battery according to the present invention comprises only a cationic monomer, and comprises a structural unit derived from a cationic (meth)acrylate-based monomer containing one or more cations, wherein the cationic (meth)acrylate-based monomer comprises a cationic mono-mer having a cross-linked form represented by Formula 2 below: 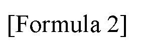 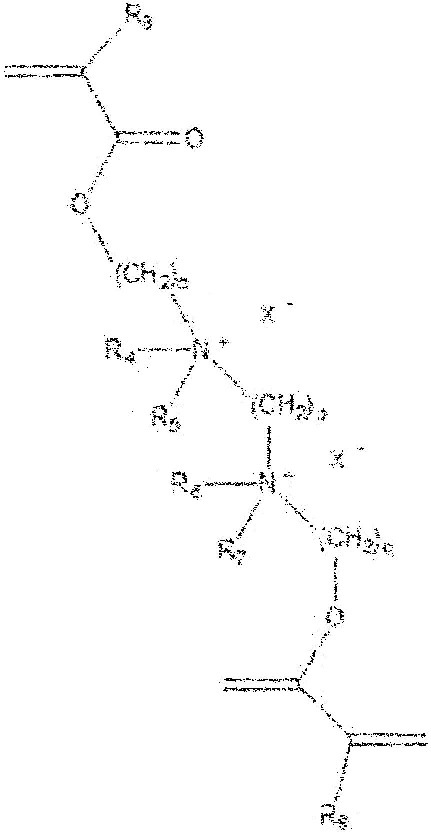 wherein R₄, R₅, R₆, R₇, R₈, and R₉ are each independently hydrogen or an alkyl group having 1 to 4 carbon atoms, X is a halogen group or bistrifluoromethanesulfonylimide (TFSI), o and q are each independently an integer from 0 to 4, and p is an integer from 0 to 8. On the other hand, the (meth)acrylate represents acrylate or methacrylate.

In a lithium secondary battery (specifically, a lithium-sulfur battery), the positive electrode binder is a component that assists in bonding of the positive electrode active material and electrically conductive material and the like and bonding to the current collector, and a binder in the form of adding some cationic compound has been reported, but in this case, it was impossible to fundamentally solve the problem caused by lithium polysulfide. Accordingly, the present applicant has developed a positive electrode binder for lithium secondary batteries in a form that is entirely composed of cationic monomer as in the present invention, and in this case, since it has a very high cation concentration compared to the existing binder, lithium polysulfide can be captured and adsorbed much more effectively.

More specifically, the cationic (meth)acrylate-based monomer comprises a cationic monomer having a cross-linked form represented by Formula 2 below and may further comprise a cationic monomer represented by Formula 1 below. It may be more preferable to comprise the cationic monomer represented by Formula 1 and a cationic monomer having a cross-linked form represented by Formula 2 together: 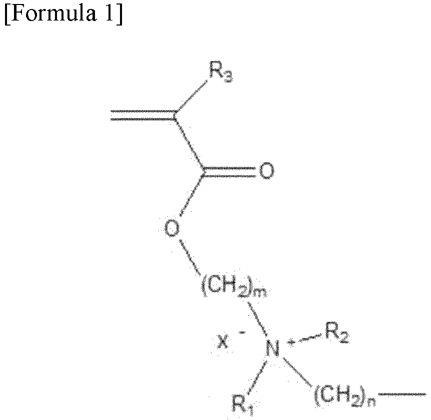 wherein R₁, R₂, and R₃ are each independently hydrogen or an alkyl group having 1 to 4 carbon atoms, preferably each methyl group, X is a halogen group (F, Cl, Br, or I) or bistrifluoromethanesulfonylimide (TFSI), and m and n are each independently an integer from 0 to 4, 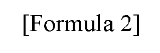 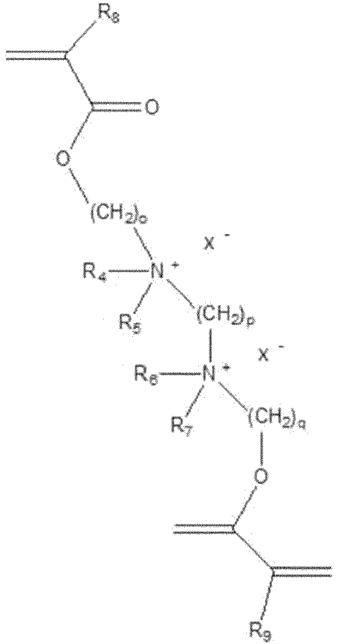 wherein R₄, R₅, R₆, R₇, R₈, and R₉ are each independently hydrogen or an alkyl group having 1 to 4 carbon atoms, preferably each a methyl group, X is a halogen group or bistrifluoromethanesulfonylimide (TFSI), o and q are each independently an integer from 0 to 4, and p is an integer from 0 to 8. In this case, it may be preferable that p is an integer of 2 to 4.

On the other hand, when the cationic (meth)acrylate-based monomer comprises a cationic monomer represented by Formula 1 and a cationic monomer having a cross-linked form represented by Formula 2, the cationic monomer represented by Formula 1 and a cationic monomer having a cross-linked form represented by Formula 2 may be comprised in a weight ratio of 0.5 to 2:2 to 0.5.

In addition, the positive electrode binder may comprise a solvent. In this case, the positive electrode binder may comprise 5 to 15% by weight of a structural unit derived from a cationic (meth)acrylate-based monomer containing one or more cations and 85 to 95% by weight of a solvent relative to the total weight of the binder. In addition, the positive electrode binder may further comprise a conventional additive that may be comprised in a conventional positive electrode binder for a lithium secondary battery, within the limit not impairing the object of the present invention.

Examples of the cationic monomer represented by Formula 1 may comprise, but are not limited to, a cationic monomer represented by Formula 1a below and a cationic monomer represented by Formula 1b below:

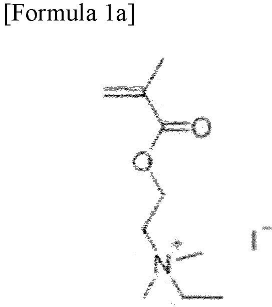

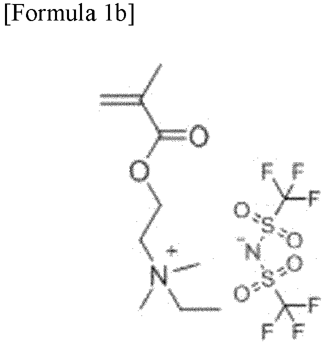

In addition, examples of the cationic monomer represented by Formula 2 may comprise, but are not limited to, a cationic monomer having a cross-linked form represented by Formula 2a below and a cationic monomer having a cross-linked form represented by Formula 2b below:

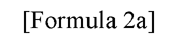

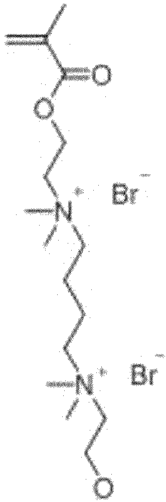

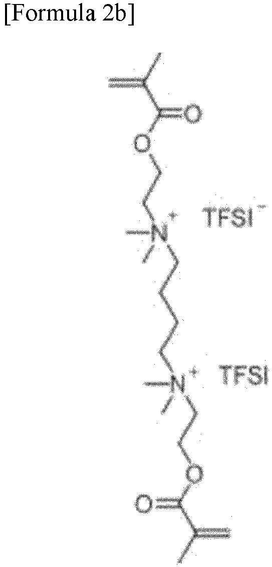

Meanwhile, as described above, the positive electrode binder for the lithium secondary battery of the present invention comprises at least a cationic monomer having a cross-linked form represented by Formula 2. For example, the positive electrode binder for the lithium secondary battery of the present invention may comprise the cationic monomer represented by Formula 1a and the cationic monomer represented by Formula 2a, may comprise the cationic monomer represented by Formula 1b and the cationic monomer represented by Formula 2a, and may comprise all of the cationic monomers represented by Formula 1a, 1b, 2a and 2b and so forth. As long as at least one cationic monomer of the present invention having a cross-linked form represented by Formula 2 is comprised, the cationic monomers may be used alone or in combination without any particular limitation.

The positive electrode binder for lithium secondary battery of the present invention described above is prepared by subjecting a (meth)acrylate-based compound containing at least one of nitrogen, oxygen and sulfur and a halogenated alkyl compound to a nucleophilic substitution reaction (S_{N}2 reaction) in the presence of a solvent to produce a cationic monomer containing a halogen anion as a counter-ion to cation. After the reaction is completed, the steps of removing the solvent and washing the reaction product to purify the unreacted material may be additionally performed (In the case of this preparation method, the cationic monomer represented by Formula 1a or the cationic monomer represented by Formula 2a may be prepared).

Examples of the (meth)acrylate-based compound containing at least one of nitrogen, oxygen and sulfur may be 2-(dimethylamino)ethyl methacrylate, 1-vinylimidazole 2-(dimethylamino)ethyl acrylate and 2-(dimethylamino)ethyl 2-(hydroxymethyl)-acrylate, etc., but any (meth)acrylate-based compound containing at least one of nitrogen, oxygen and sulfur may be used without any particular limitation. In addition, examples of the halogenated alkyl compound may be general halogenated alkyl compounds such as ethyl iodide and 1,4-dibromobutane.

The amount of the halogenated alkyl compound may be 0.5 to 1 equivalent relative to 1 equivalent of the (meth)acrylate-based compound containing at least one of nitrogen, oxygen, and sulfur. In addition, the nucleophilic substitution reaction (S_{N}2 reaction) may be performed at 30 to 70 °C for 12 to 24 hours, the solvent may be removed by a method commonly used in the art, such as a rotary evaporator, and the washing may be performed using an organic solvent such as diethyl ether.

On the other hand, when the halogenated alkyl compound is used in an amount of 0.5 equivalent relative to 1 equivalent of the (meth)acrylate-based compound, the cationic monomer may be prepared in a cross-linked form (In this case, the cationic monomer represented by Formula 2a or the cationic monomer represented by Formula 2b may be prepared).

Meanwhile, in order to carry out ion exchange with a bistrifluoromethanesulfonylimide (TFSI) anion which has relatively few side reactions and is more easily dissociated from the cation during the operation of the battery, after the reaction is terminated, a step of adding a lithium salt (LiTFSI) to the cationic monomer containing the halogen anion to induce an ion exchange reaction, and thus prepare a cationic monomer containing a bistrifluoromethanesulfonylimide (TFSI) anion as a counter ion for cation may be further comprised. In addition, if necessary, a step of purifying the unreacted material may be further comprised (According to this preparation method, the cationic monomer represented by Formula 1b or the cationic monomer represented by Formula 2b may be prepared, and if the halogenated alkyl compound is used in an amount of 0.5 equivalent relative to 1 equivalent of the (meth)acrylate-based compound, only the cationic monomer represented by Formula 2b can be prepared).

The ion exchange reaction may be performed at room temperature for 12 to 24 hours, and purification after the ion exchange reaction may be performed through a process of dissolving the product, which has settled after the ion exchange reaction, in an organic solvent such as tetrahydrofuran, and then precipitating it in purified water (DI water).

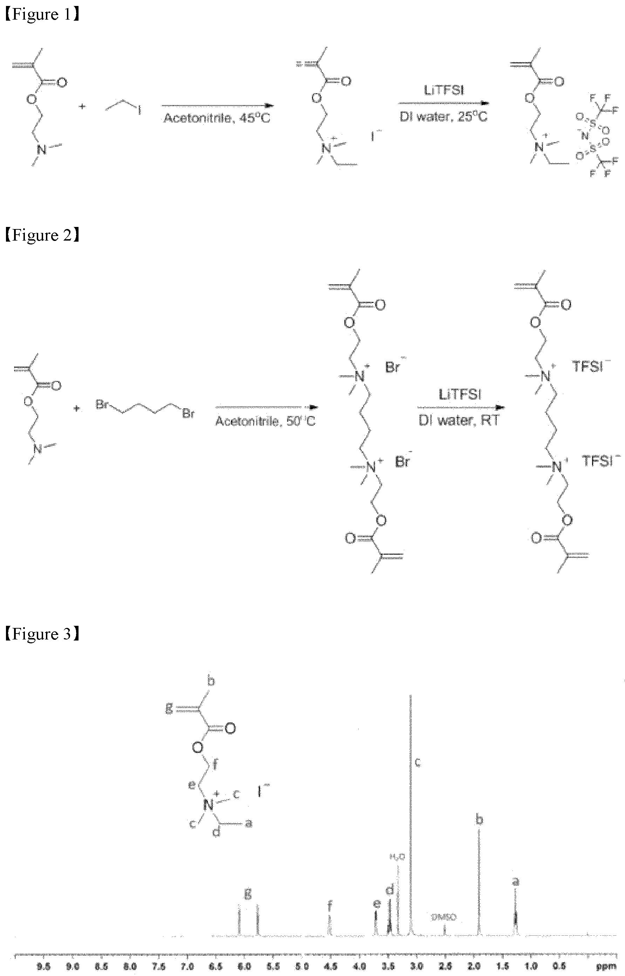

Meanwhile, FIGs. 1 and 2 are reaction schemes showing a process of manufacturing a positive electrode binder for a lithium secondary battery according to an embodiment of the present invention. It can be seen from FIG. 1 that the cationic monomer represented by Formula 1a and the cationic monomer represented by Formula 1b are sequentially prepared, and it can be seen from FIG. 2 that the cationic monomer represented by Formula 2a and the cationic monomer represented by Formula 2b are sequentially prepared.

### Positive electrode for lithium secondary battery

The positive electrode for a lithium secondary battery according to the present invention comprises the positive electrode binder described above and the positive electrode active material.

Such a positive electrode for a lithium secondary battery of the present invention can exhibit excellent battery performance due to the electrostatic attraction between cation contained in the positive electrode binder and lithium polysulfide, and in particular, improves the positive electrode comprising the PVDF binder generally used in lithium secondary batteries such as conventional lithium-sulfur batteries.

In other words, if the positive electrode binder of the present invention is included in the positive electrode of the lithium-sulfur battery, the volume change of sulfur during charging and discharging of the lithium-sulfur battery can be suppressed, and above all, it can improve battery performance by trapping and adsorbing lithium polysulfide to prevent lithium polysulfide generated from the positive electrode from leaching into the liquid electrolyte during the operation of the battery.

In the positive electrode for the lithium secondary battery, the positive electrode binder may be contained in an amount of 1 to 50 parts by weight, preferably 3 to 15 parts by weight, relative to 100 parts by weight of the total weight of the positive electrode. If the content of the binder is less than 1 part by weight, the adhesive force between the positive electrode active material and the current collector may be insufficient or the ability to hold lithium polysulfide may be reduced. If the content exceeds 50 parts by weight, the adhesive force is improved, but the content of the positive electrode active material is reduced by that amount, so that the battery capacity may be lowered.

The positive electrode active material preferably contains sulfur (S) atoms, and more preferably may be a sulfur-carbon composite. Considering that since sulfur has an electrical conductivity of about 5.0 x 10⁻¹⁴ S/cm and thus is close to nonconductor, electrochemical reaction at the electrode is not easy, and due to the very large overvoltage, the actual discharging capacity and voltage are far below the theoretical value, a carbon material having electrical conductivity is used together (that is, a structure in which sulfur is supported in the pores of the carbon material).

The sulfur contained in such sulfur-carbon composite may be at least one selected from the group consisting of inorganic sulfur (S₈), Li₂Sn(n≥1), an organic sulfur compound, and a carbon-sulfur polymer [(C₂Sₓ)ₙ: x=2.5 to 50, n≥2], among which it may be preferable to apply inorganic sulfur (S₈). In addition, the carbon material constituting the sulfur-carbon composite may be applied without any particular limitation as long as it has a porous structure or a high specific surface area and is commonly used in the art. For example, the carbon material having the porous structure may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); and activated carbon, and its shape can be used without restriction as long as it is in the form of sphere, rod, needle, plate, tube, or bulk and is commonly used in the lithium secondary battery.

The sulfur-carbon composite may have a particle size of 10 to 50 *µ*m. If the particle size of the sulfur-carbon composite is less than 10 *µ*m, there is a problem that the resistance between the particles increases and an overvoltage occurs in the electrode of the lithium-sulfur battery. If the particle size exceeds 50 *µ*m, the surface area per unit weight is reduced, and thus the wetting area with the electrolyte solution in the electrode and the reaction site with the lithium ion are decreased, and the amount of electron transfer relative to the size of the composite is reduced, so that the reaction can be delayed, and as a result, the discharging capacity of the battery can be reduced.

Meanwhile, the positive electrode for the lithium secondary battery may further comprise an electrically conductive material.

The electrically conductive material is not particularly limited as long as it does not cause side reactions in the internal environment of the lithium secondary battery and has excellent electrical conductivity while not causing chemical changes in the battery. Typically, the electrically conductive material may be graphite or electrically conductive carbon, and may be, for example, but is not limited to, one selected from the group consisting of graphite such as natural graphite or artificial graphite; carbon black such as carbon black, acetylene black, Ketjen black, Denka black, thermal black, channel black, furnace black, lamp black, and summer black; carbon-based materials whose crystal structure is graphene or graphite; electrically conductive fibers such as carbon fibers and metal fibers; carbon fluoride; metal powders such as aluminum and nickel powder; electrically conductive whiskers such as zinc oxide and potassium titanate; electrically conductive oxides such as titanium oxide; electrically conductive polymers such as polyphenylene derivatives; and a mixture of two or more thereof.

The electrically conductive material is typically added in an amount of 0.5 to 50 parts by weight, preferably 1 to 30 parts by weight based on 100 parts by weight of total weight of the positive electrode material comprising the positive electrode active material. If the content of electrically conductive material is too low, that is, if it is less than 0.5 parts by weight, it is difficult to obtain an effect on the improvement of the electrical conductivity, or the electrochemical characteristics of the battery may be deteriorated. If the content of the electrically conductive material exceeds 50 parts by weight, that is, if it is too much, the amount of positive electrode active material is relatively small and thus capacity and energy density may be lowered. The method of incorporating the electrically conductive material into the positive electrode material is not particularly limited, and conventional methods known in the related art such as coating on the positive electrode active material can be used. Also, if necessary, the addition of the second coating layer with electrical conductivity to the positive electrode active material may replace the addition of the electrically conductive material as described above.

A filler may be selectively added to the positive electrode of the present invention as a component for inhibiting the expansion of the positive electrode. Such a filler is not particularly limited as long as it can inhibit the expansion of the electrode without causing chemical changes in the battery, and examples thereof may comprise olefinic polymers such as polyethylene and polypropylene; fibrous materials such as glass fibers and carbon fibers.

The positive electrode current collector may be, but is not limited to, platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), ITO (In doped SnO₂), FTO (F doped SnO₂), or an alloy thereof, or aluminum (Al) or stainless steel whose surface is treated with carbon (C), nickel (Ni), titanium (Ti) or silver (Ag) or so on. The shape of the positive electrode current collector may be in the form of a foil, film, sheet, punched form, porous body, foam or the like.

### Lithium secondary battery

In addition, the present invention provides a lithium secondary battery comprising a positive electrode for the lithium secondary battery, a lithium metal negative electrode, an electrolyte interposed between the positive electrode and the negative electrode, and a separator, and the lithium secondary battery is preferably a lithium-sulfur battery.

In general, the lithium secondary battery is composed of a positive electrode composed of a positive electrode material and a current collector, a negative electrode composed of a negative electrode material and a current collector, and a separator that blocks electrical contact between the positive electrode and the negative electrode and allows lithium ions to move, and comprises an electrolyte solution for conducting lithium ions by being impregnated therein. The negative electrode may be manufactured according to a conventional method known in the art. For example, the negative electrode active material, the electrically conductive material, the binder, and if required the filler and the like are dispersed and mixed in a dispersion medium (solvent) to form a slurry, and the slurry can be applied onto the negative electrode current collector, followed by drying and rolling it to prepare a negative electrode.

The negative electrode active material may be a lithium metal or a lithium alloy (for example, an alloy of lithium and a metal such as aluminum, zinc, bismuth, cadmium, antimony, silicon, lead, tin, gallium or indium). The negative electrode current collector may be, but is not limited to, platinum (Pt), gold (Au), palladium (Pd), iridium (Ir), silver (Ag), ruthenium (Ru), nickel (Ni), stainless steel (STS), copper (Cu), molybdenum (Mo), chromium (Cr), carbon (C), titanium (Ti), tungsten (W), ITO (In doped SnO₂), FTO (F doped SnO₂), or an alloy thereof, or copper (Cu) or stainless steel whose surface was treated with carbon (C), nickel (Ni), titanium (Ti) or silver (Ag) or so on. The shape of the negative electrode current collector may be in the form of a foil, film, sheet, punched form, porous body, foam or the like.

The separator is interposed between the positive electrode and the negative electrode and prevents a short circuit therebetween and serves as a pathway for lithium ions. Olefin-based polymers such as polyethylene and polypropylene, glass fibers or the like may be used in the form of sheets, multilayers, microporous films, woven fabrics, nonwoven fabrics or the like as the separator, but the present invention is not limited thereto. Meanwhile, if a solid electrolyte (e.g., an organic solid electrolyte, an inorganic solid electrolyte, etc.) such as a polymer is used as the electrolyte, the solid electrolyte may also serve as a separator. Specifically, an insulating thin film with high ion permeability and mechanical strength is used. The pore diameter of the separator is generally in the range of 0.01 to 10 *µ*m, and the thickness may generally be in the range of 5 to 300 *µ*m.

As the electrolyte solution which is a non-aqueous electrolyte solution (non-aqueous organic solvent), carbonate, ester, ether, or ketone may be used alone or in combination of two or more thereof, but is not limited thereto. For example, an aprotic organic solvent, such as dimethyl carbonate, diethyl carbonate, dipropyl carbonate, methyl propyl carbonate, ethyl propyl carbonate, methyl ethyl carbonate, ethylene carbonate, propylene carbonate, butylene carbonate, γ-butyrolactone, n-methyl acetate, n-ethyl acetate, n-propyl acetate, phosphoric acid triester, dibutyl ether, N-methyl-2-pyrrolidinone, 1,2-dimethoxyethane, tetrahydrofuran, tetrahydrofuran derivatives such as 2-methyltetrahydrofuran, dimethyl sulfoxide, formamide, dimethylformamide, dioxolane and derivatives thereof, acetonitrile, nitromethane, methyl formate, methyl acetate, trimethoxymethane, sulfolane, methyl sulfolane, 1,3-dimethyl-2-imidazolidinone, methyl propionate, ethyl propionate and the like can be used, but is not limited thereto.

Lithium salts may be added to the electrolyte solution (so-called non-aqueous electrolyte solution containing lithium salt). The lithium salts may comprise, but not limited to, those known to be favorably soluble in non-aqueous electrolyte solutions, for example, LiCl, LiBr, LiI, LiClO₄, LiBF₄, LiB₁₉Cl₁₀, LiPF₆, LiCF₃SO₃, LiCF₃CO₂, LiAsF₆, LiSbF₆, LiPF₃(CF₂CF₃)₃, LiAlCl₄, CH₃SO₃Li, CF₃SO₃Li, (CF₃SO₂)₂NLi, lithium chloroborane, lithium lower aliphatic carboxylate, lithium tetraphenyl borate, or lithium imide, etc. The (non-aqueous) electrolyte solution may further comprise pyridine, triethylphosphite, triethanolamine, cyclic ether, ethylene diamine, n-glyme, hexamethylphosphoric triamide, nitrobenzene derivatives, sulfur, quinoneimine dyes, N-substituted oxazolidinone, N,N-substituted imidazolidine, ethylene glycol dialkyl ether, ammonium salt, pyrrole, 2-methoxy ethanol, aluminum trichloride or the like, for the purpose of improving charging-discharging characteristics, flame retardancy, and the like. If necessary, halogen-containing solvents such as carbon tetrachloride and ethylene trifluoride may be further added to impart nonflammability, and carbon dioxide gas may be further added to improve the high-temperature conservation characteristics.

The lithium secondary battery of the present invention can be manufactured by a conventional method in the art. For example, the lithium secondary battery can be manufactured by inserting the porous separator between the positive electrode and the negative electrode, and introducing the non-aqueous electrolyte solution. The lithium secondary battery according to the present invention is not only applicable to a battery cell used as a power source of a small device but also particularly suitably usable as a unit cell of a battery module which is a power source of a medium and large-sized device. In this respect, the present invention also provides a battery module in which at least two lithium secondary batteries are electrically connected (in series or in parallel). It is needless to say that the number of lithium secondary batteries comprised in the battery module may be variously adjusted in consideration of the use and capacity of the battery module.

In addition, the present invention provides a battery pack in which the battery modules are electrically connected according to a conventional technique in the art. The battery module and the battery pack may be used as a power source for at least one medium and large-sized device selected from power tools; electric cars comprising an electric vehicle (EV), a hybrid electric vehicle (HEV), and a plug-in hybrid electric vehicle (PHEV); electric trucks; electric commercial vehicles; or power storage systems, but the present invention is not limited thereto.

Hereinafter, preferred examples of the present invention will be described in order to facilitate understanding of the present invention. It will be apparent to those skilled in the art, however, that the following examples are only illustrative of the present invention.

In the following examples, cationic monomers represented by Formulas 1a, 1b, 2a, and 2b are prepared, and for convenience, they will be described again below:

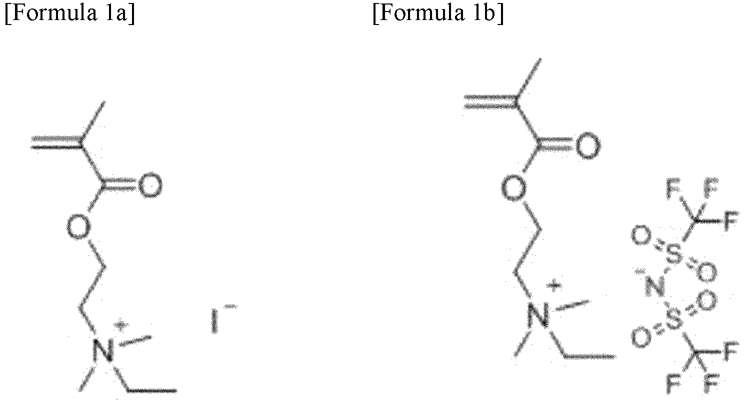

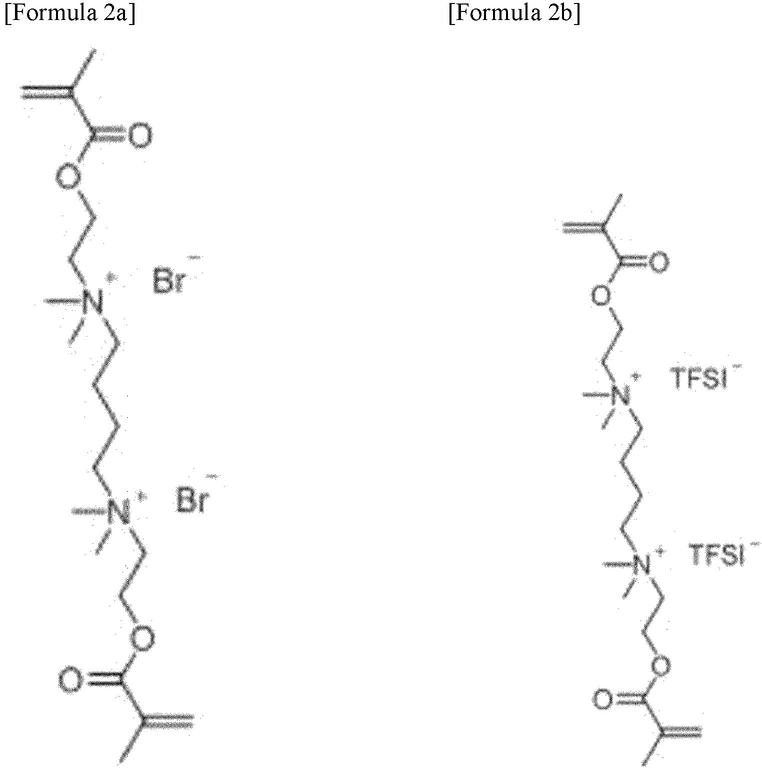

### [Example 1] Preparation of positive electrode binder for lithium secondary battery

First, 2-(dimethylamino)ethyl methacrylate was placed in an acetonitrile solvent, stirred at 45 °C, and then ethyl iodide was added dropwise thereto, and the reaction (nucleophilic substitution reaction (S_{N}2 reaction)) was allowed to be carried out at 45 °C for 18 hours. After the reaction was completed, the solvent was removed using a rotary evaporator, and the reaction product was washed with diethyl ether to purify the unreacted material, thereby preparing the cationic monomer represented by Formula 1a.

Then, LiTFSI and the prepared cationic monomer of Formula 1a were each dissolved in purified water (DI water), and then the solution containing LiTFSI was added dropwise to the solution containing the cationic monomer of Formula 1a, and then stirred at room temperature for 18 hours (ion exchange reaction), dissolved in MC, and extracted with purified water to purify the unreacted material, thereby preparing a cationic monomer (positive electrode binder) represented by Formula 1b.

### [Example 2] Preparation of positive electrode binder for lithium secondary battery

First, 2-(dimethylamino)ethyl methacrylate was placed in an acetonitrile solvent, stirred at 50 °C, and then 0.5 equivalents of 1,4-dibromobutane was added dropwise thereto, and the reaction (nucleophilic substitution reaction (S_{N}2 reaction)) was allowed to be carried out at 50 °C for 18 hours. After the reaction was completed, the solvent was removed using a rotary evaporator, and the reaction product was washed with diethyl ether to purify the unreacted material, thereby preparing a cationic monomer having a cross-linked form represented by Formula 2a.

Then, LiTFSI and the prepared cationic monomer of Formula 2a were each dissolved in purified water (DI water), and then the solution containing LiTFSI was added dropwise to the solution containing the cationic monomer of Formula 2a, and then stirred at room temperature for 18 hours (ion exchange reaction), and then the settled reaction product was dissolved in THF and precipitated three times in purified water to purify the unreacted material, thereby preparing a cationic monomer having a cross-linked form (positive electrode binder) represented by Formula 2b.

### [Experimental Example 1] Analysis of chemical structure of positive electrode binder (cationic monomer)

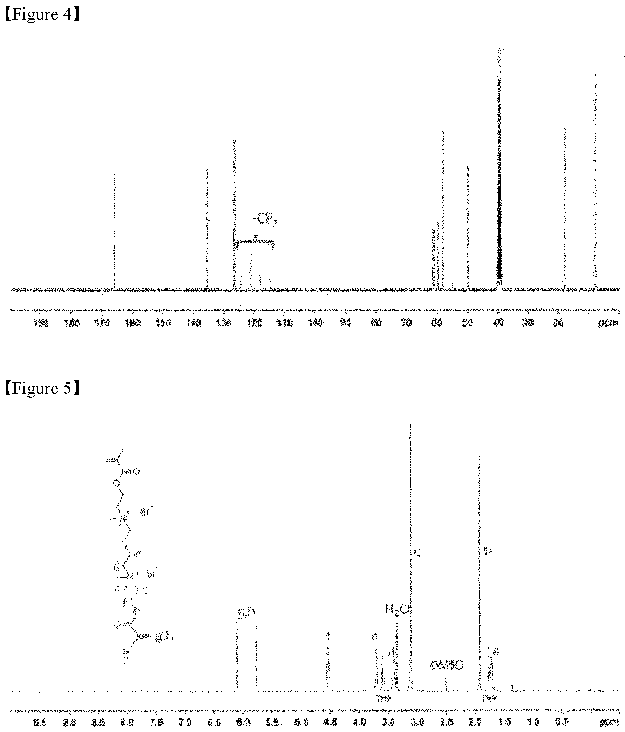

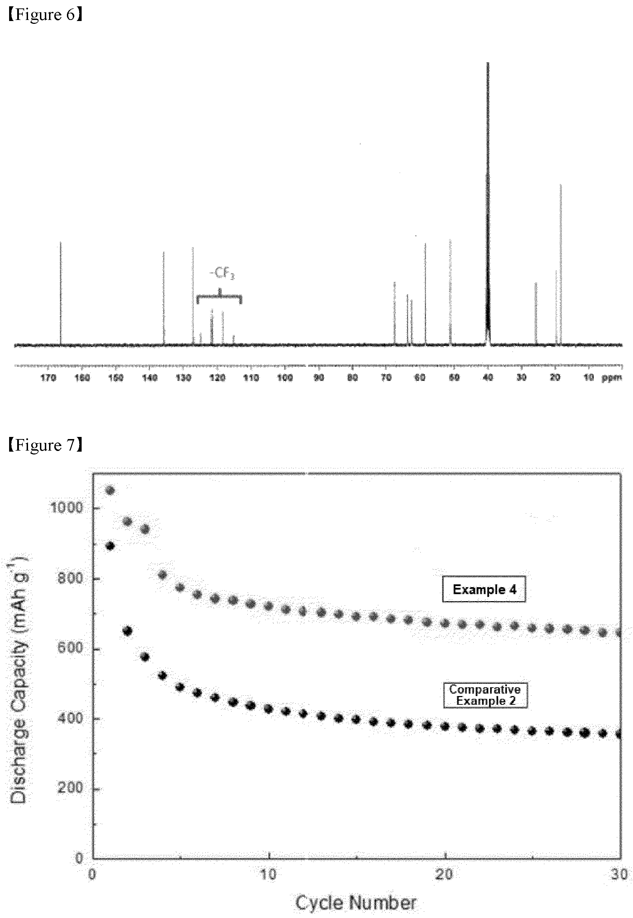

NMR analysis was performed to confirm whether the cationic monomer prepared in Examples 1 and 2 was normally synthesized. FIGs. 3 and 5 are graphs showing the results of ¹H NMR analysis of a cationic monomer prepared through a nucleophilic substitution reaction according to an example of the present invention, and FIGs. 4 and 6 are graphs showing the results of ¹³C NMR analysis of a cationic monomer prepared through an ion exchange reaction according to an example of the present invention. Specifically, FIG. 3 is a graph of ¹H NMR analysis of the 'cationic monomer represented by Formula 1a' prepared in Example 1, FIG. 4 is a graph of ¹³C NMR analysis of the 'cationic monomer represented by Formula 1b' prepared in Example 1, FIG. 5 is a graph of ¹H NMR analysis of the 'cationic monomer having a cross-linked form represented by Formula 2a' prepared in Example 2, and FIG. 6 is a graph of ¹³C NMR analysis of the 'cationic monomer having a cross-linked form represented by Formula 2b' prepared in Example 2.

First, as a result of NMR analysis to confirm whether the cationic monomer prepared in Example 1 was synthesized normally, as shown in FIG. 3, the chemical structure of the cationic monomer (Formula 1a) prepared through the nucleophilic substitution reaction was all shown, and through FIG. 4, it was confirmed that the CF₃ group contained in the TFSI anion was observed after ion exchange, and thus it was confirmed that the cationic monomer (Formula 1b) prepared through the ion exchange reaction was also normally synthesized.

Next, as a result of NMR analysis to confirm whether the cationic monomer prepared in Example 2 was synthesized normally, as shown in FIG. 5, the chemical structure of the cationic monomer (Formula 2a) prepared through the nucleophilic substitution reaction was all shown, and through FIG. 6, it was confirmed that the CF₃ group contained in the TFSI anion was observed after ion exchange, and thus it was confirmed that the cationic monomer (Formula 2b) prepared through the ion exchange reaction was also normally synthesized.

### [Example 3] Preparation of positive electrode for lithium secondary battery

A pre-binder solution was prepared by dissolving the positive electrode binder prepared in Example 1 and the positive electrode binder prepared in Example 2 in NMP solvent, together with 3 mol% of V-65 (manufacturer: Wako Chemical) as a thermal initiator ( 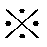 V-65: 2,2'-Azobis(2,4-dimethylvaleronitrile. It is a thermal initiator with a lower onset temperature than AIBN, and due to the characteristics of the sulfur positive electrode that cannot be heat treated at high temperature, it was used as an initiator).

Next, a positive electrode slurry was prepared by mixing a positive electrode active material (Ketjen black: Sulfur = 3:7 (wt%)), an electrically conductive material (Super P), and a binder material in a mass ratio of 7:2: 1. Finally, the prepared positive electrode slurry was coated on aluminum foil with a doctor blade, and dried in a vacuum oven at 60°C for 12 hours to prepare a positive electrode for a lithium secondary battery.

### [Comparative Example 1] Preparation of positive electrode for lithium secondary battery

A positive electrode slurry was prepared by dissolving PVDF in NMP solvent to prepare binder solution, and then mixing a positive electrode active material (Ketjen black : Sulfur = 3:7 (wt%)), an electrically conductive material (Super P) and the binder material in a mass ratio of 7:2:1. Finally, the prepared positive electrode slurry was coated on aluminum foil with a doctor blade, and dried in a vacuum oven at 60°C for 12 hours to prepare a positive electrode for a lithium secondary battery.

### [Example 4, Comparative Example 2] Preparation of lithium-sulfur battery

The positive electrodes prepared in Example 3 and Comparative Example 1 were positioned to face the lithium metal negative electrodes, and then, Celgard separators were interposed between the positive electrodes and the negative electrodes. Then, an electrolyte solution prepared by dissolving LiTFSI and LiNO₃ at concentrations of 1M and 0.2M in DOL/DME solvent, respectively, was injected into the case to prepare a coin cell type lithium-sulfur battery.

### [Experimental Example 2] Evaluation of discharging capacity and lifetime characteristics of lithium secondary battery

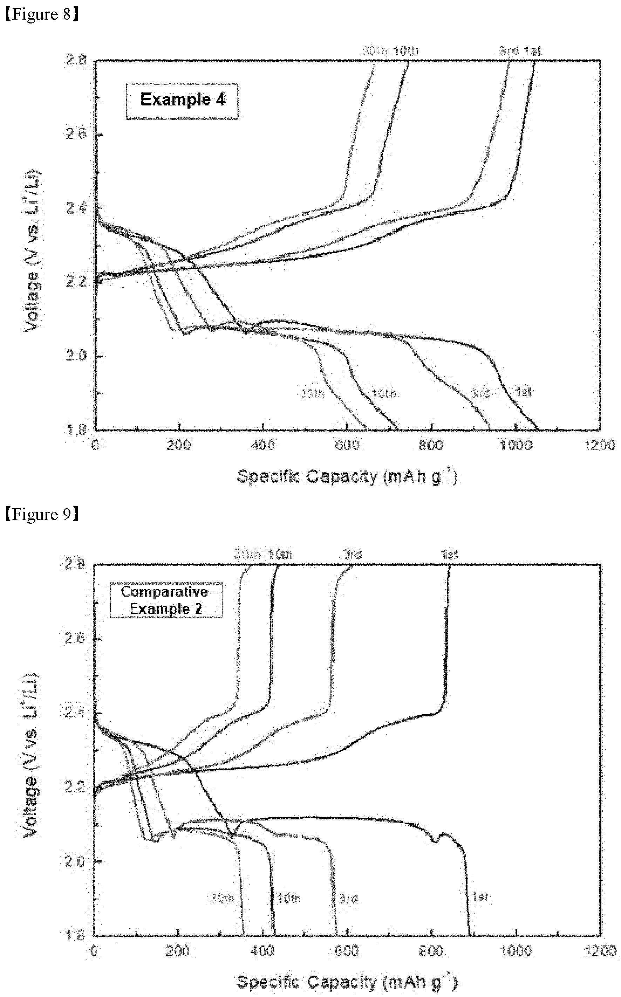

For lithium-sulfur batteries manufactured in Example 4 and Comparative Example 2, discharging capacity and lifetime characteristics were evaluated by setting the current density to 0.2 to 2 C-rate. FIG. 7 is graph comparing the discharging capacity and lifetime characteristics of the lithium-sulfur batteries according to examples of the present invention and comparative examples, FIG. 8 is a capacity-voltage graph of a lithium-sulfur battery according to an example of the present invention, and FIG. 9 is a capacity-voltage graph of a lithium-sulfur battery in which a conventional binder is applied to a positive electrode.

As a result of evaluation of the discharging capacity and lifetime characteristics of lithium-sulfur batteries manufactured in Example 4 and Comparative Example 2 as described above, as shown in FIG. 7, the lithium-sulfur battery of Example 4 in which a cationic monomer was applied as a positive electrode binder showed excellent discharging capacity and lifetime characteristics, as compared to the lithium-sulfur battery of Comparative Example 2 in which PVDF, a conventional binder, was applied as a positive electrode binder.

In addition, through FIGS. 8 and 9 showing capacity-voltage graphs of lithium-sulfur batteries prepared in Example 4 and Comparative Example 2, it was confirmed that the range of 2.1V-1.8V, where the reduction reaction from Li₂S₄ to Li₂S occurs, was longer in the lithium-sulfur battery of Example 4 in which cationic monomer was applied as a positive electrode binder. Through this, it can be seen that when the cationic monomer of the present invention is used as a positive electrode binder, lithium polysulfide is fixed inside the positive electrode and an additional reaction occurs.

## Claims

1. A positive electrode binder for a lithium secondary battery comprising a structural unit derived from a cationic (meth)acrylate-based monomer containing one or more cations,
wherein the cationic (meth)acrylate-based monomer comprises a cationic monomer having a cross-linked form represented by Formula 2 below: 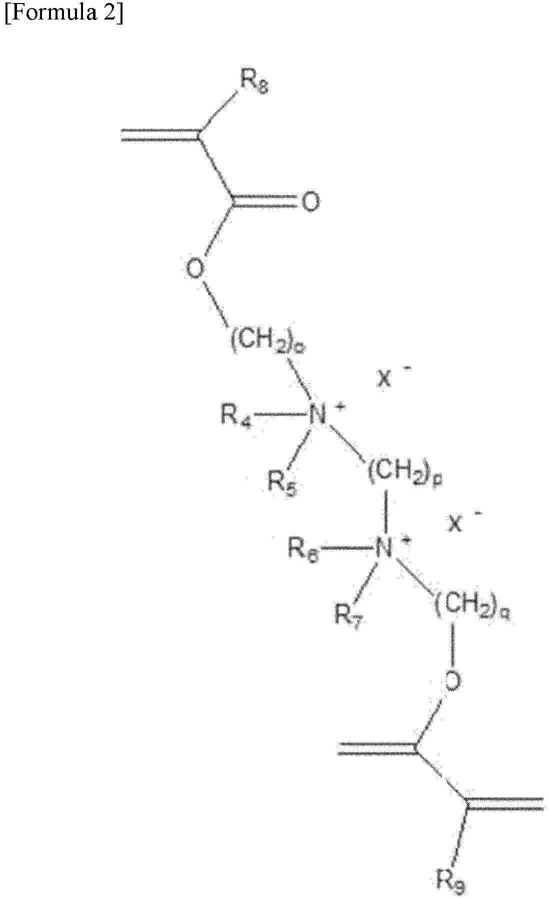
wherein R₄, R₅, R₆, R₇, R₈, and R₉ are each independently hydrogen or an alkyl group having 1 to 4 carbon atoms, X is a halogen group or bistrifluoromethanesulfonylimide (TFSI), o and q are each independently an integer from 0 to 4, and p is an integer from 0 to 8.

2. The positive electrode binder for the lithium secondary battery according to claim 1, wherein the cation is at least one selected from nitrogen cation, oxygen cation, and sulfur cation.

3. The positive electrode binder for the lithium secondary battery according to claim 1, wherein the cationic (meth)acrylate-based monomer further comprises a cationic monomer represented by Formula 1 below: 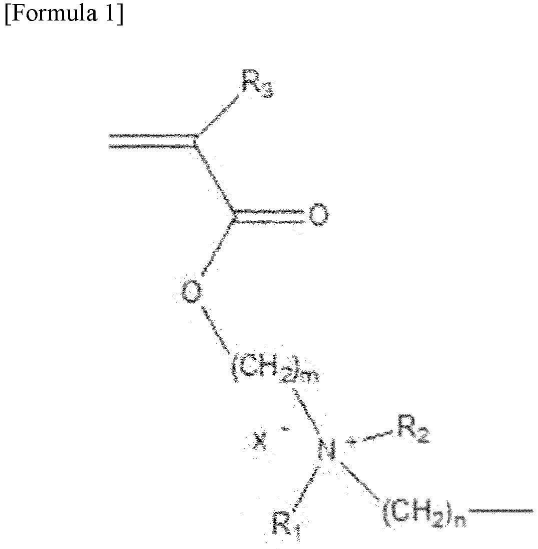 wherein R₁, R₂, and R₃ are each independently hydrogen or an alkyl group having 1 to 4 carbon atoms, X is a halogen group or bistrifluoromethanesulfonylimide (TFSI), and m and n are each independently an integer from 0 to 4,

4. The positive electrode binder for the lithium secondary battery according to claim 3, wherein the cationic (meth)acrylate-based monomer comprises a cationic monomer represented by Formula 1 and a cationic monomer having a cross-linked form represented by Formula 2 in a weight ratio of 0.5 to 2:2 to 0.5.

5. The positive electrode binder for the lithium secondary battery according to claim 1, wherein the positive electrode binder includes 5 to 15% by weight of a structural unit derived from a cationic (meth)acrylate-based monomer containing at least one cation and 85 to 95% by weight of a solvent relative to the total weight of the binder.

6. The positive electrode binder for the lithium secondary battery according to claim 3, wherein the cationic monomer represented by Formula 1 is a cationic monomer represented by Formula 1a below or a cationic monomer represented by Formula 1b below:

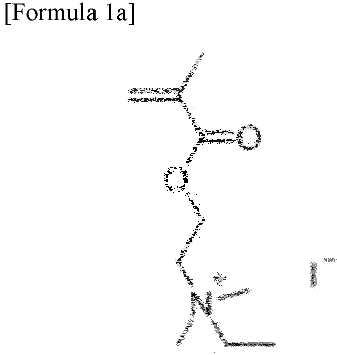

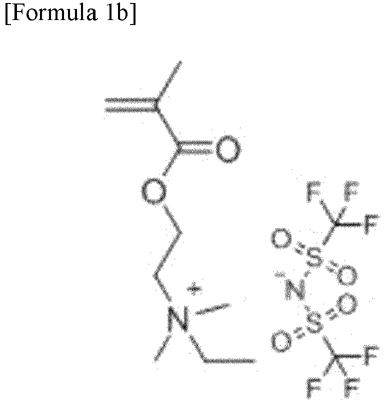

7. The positive electrode binder for the lithium secondary battery according to claim 1, wherein the cationic monomer having a cross-linked form represented by Formula 2 is a cationic monomer having a cross-linked form represented by Formula 2a below or a cationic monomer having a cross-linked form represented by Formula 2b below:

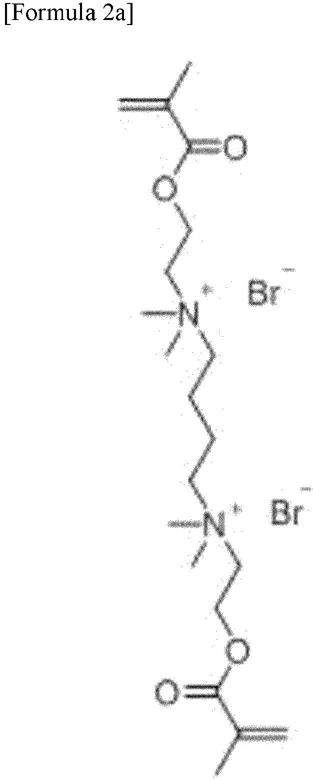

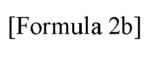

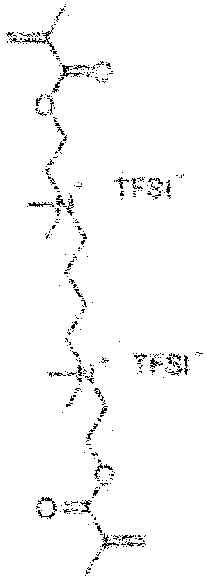

8. A positive electrode for a lithium secondary battery comprising the positive electrode binder of claim 1; and a positive electrode active material.

9. The positive electrode for the lithium secondary battery according to claim 8, wherein the positive electrode active material is a sulfur-carbon composite.

10. The positive electrode for the lithium secondary battery according to claim 8, wherein the positive electrode binder is contained in an amount of 1 to 50 parts by weight relative to 100 parts by weight of the total weight of the positive electrode.

11. A lithium secondary battery comprising the positive electrode for the lithium secondary battery of claim 8; a lithium metal negative electrode; an electrolyte interposed between the positive electrode and the negative electrode; and a separator.

12. The lithium secondary battery according to claim 11, wherein the lithium secondary battery is a lithium-sulfur battery.

## Patentansprüche

1. Positivelektrodenbindemittel für eine Lithiumsekundärbatterie, umfassend eine Struktureinheit, die von einem kationischen Monomer auf Basis von (Meth)acrylat, das ein oder mehrere Kationen enthält, abgeleitet ist,
wobei das kationische Monomer auf Basis von (Meth)acrylat ein kationisches Monomer mit einer vernetzten Form umfasst, das durch die nachstehende Formel 2 dargestellt ist: 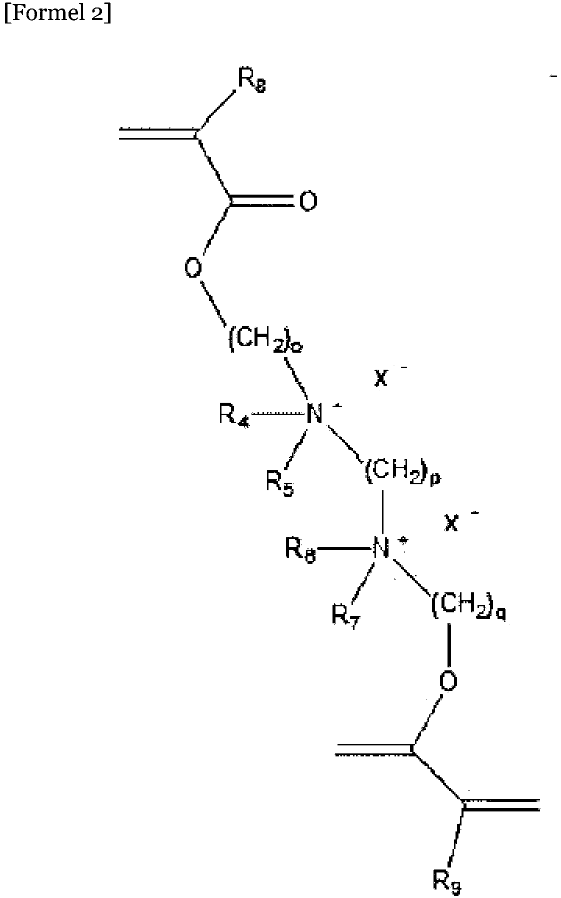
wobei R₄, R₅, R₆, R₇, R₈ und R₉ jeweils unabhängig voneinander Wasserstoff oder eine Alkylgruppe mit 1 bis 4 Kohlenstoffatomen sind, X eine Halogengruppe oder Bistrifluormethansulfonylimid (TFSI) ist, o und q jeweils unabhängig voneinander eine ganze Zahl von 0 bis 4 sind und p eine ganze Zahl von 0 bis 8 ist.

2. Positivelektrodenbindemittel für die Lithiumsekundärbatterie nach Anspruch 1, bei dem das Kation mindestens eines ist, das aus Stickstoffkation, Sauerstoffkation und Schwefelkation ausgewählt ist.

3. Positivelektrodenbindemittel für die Lithiumsekundärbatterie nach Anspruch 1, bei dem das kationische Monomer auf Basis von (Meth)acrylat ferner ein kationisches Monomer umfasst, das durch die nachstehende Formel 1 dargestellt ist: 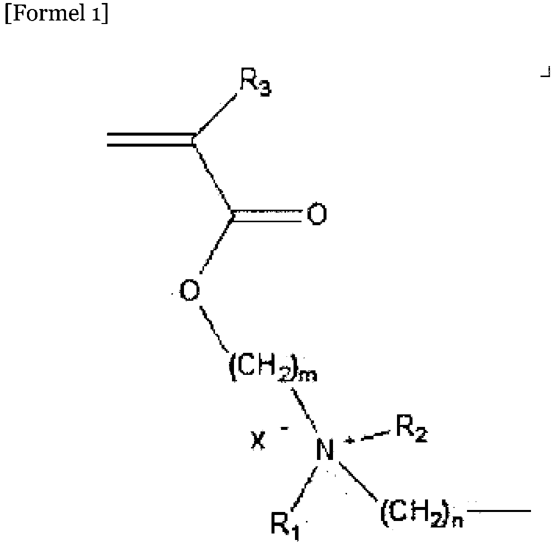 wobei R₁, R₂ und R₃ jeweils unabhängig voneinander Wasserstoff oder eine Alkylgruppe mit 1 bis 4 Kohlenstoffatomen sind, X eine Halogengruppe oder Bistrifluormethansulfonylimid (TFSI) ist und m und n jeweils unabhängig voneinander eine ganze Zahl von 0 bis 4 sind.

4. Positivelektrodenbindemittel für die Lithiumsekundärbatterie nach Anspruch 3, bei dem das kationische Monomer auf Basis von (Meth)acrylat ein kationisches Monomer, das durch die Formel 1 dargestellt ist, und ein kationisches Monomer mit einer vernetzten Form, das durch die Formel 2 dargestellt ist, in einem Gewichtsverhältnis von 0,5 bis 2:2 bis 0,5 umfasst.

5. Positivelektrodenbindemittel für die Lithiumsekundärbatterie nach Anspruch 1, bei dem das Positivelektrodenbindemittel 5 bis 15 Gew.-% einer Struktureinheit, die von einem kationischen Monomer auf Basis von (Meth)acrylat, das mindestens ein Kation enthält, abgeleitet ist, und 85 bis 95 Gew.-% eines Lösungsmittels, bezogen auf das Gesamtgewicht des Bindemittels, enthält.

6. Positivelektrodenbindemittel für die Lithiumsekundärbatterie nach Anspruch 3, bei dem das kationische Monomer, das durch die Formel 1 dargestellt ist, ein kationisches Monomer, das durch die nachstehende Formel 1a dargestellt ist, oder ein kationisches Monomer, das durch die nachstehende Formel 1b dargestellt ist, ist:

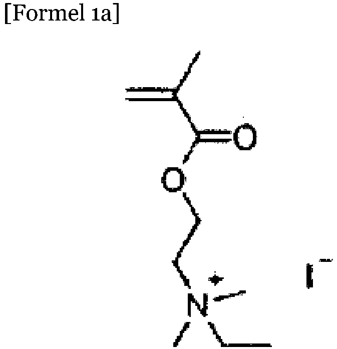

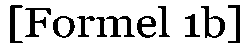

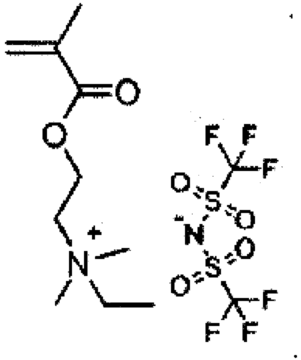

7. Positivelektrodenbindemittel für die Lithiumsekundärbatterie nach Anspruch 1, bei dem das kationische Monomer mit einer vernetzten Form, das durch die Formel 2 dargestellt ist, ein kationisches Monomer mit einer vernetzten Form, das durch die nachstehende Formel 2a dargestellt ist, oder ein kationisches Monomer mit einer vernetzten Form, das durch die nachstehende Formel 2b dargestellt ist, ist:

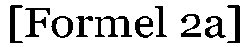

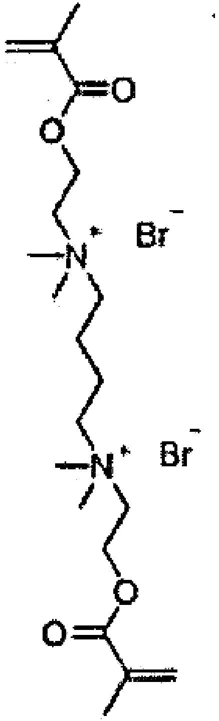

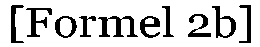

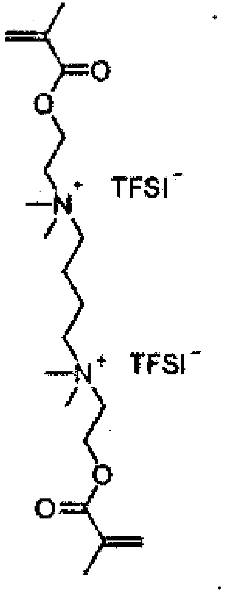

8. Positivelektrode für eine Lithiumsekundärbatterie, umfassend das Positivelektrodenbindemittel nach Anspruch 1; und ein Positivelektrodenaktivmaterial.

9. Positivelektrode für die Lithiumsekundärbatterie nach Anspruch 8, bei der das Positivelektrodenaktivmaterial ein Schwefel-Kohlenstoff-Verbundstoff ist.

10. Positivelektrode für die Lithiumsekundärbatterie nach Anspruch 8, bei der das Positivelektrodenbindemittel in einer Menge von 1 bis 50 Gewichtsteilen, bezogen auf 100 Gewichtsteile des Gesamtgewichts der Positivelektrode, enthalten ist.

11. Lithiumsekundärbatterie, umfassend die Positivelektrode für die Lithiumsekundärbatterie nach Anspruch 8; eine Lithiummetall-Negativelektrode; einen Elektrolyten, der zwischen der Positivelektrode und der Negativelektrode angeordnet ist; und einen Separator.

12. Lithiumsekundärbatterie nach Anspruch 11, bei der die Lithiumsekundärbatterie eine Lithium-Schwefel-Batterie ist.

## Revendications

1. Liant d'électrode positive pour une batterie rechargeable au lithium comprenant une unité structurelle dérivée d'un monomère à base de (méth)acrylate cationique contenant un ou plusieurs cations,
dans lequel le monomère à base de (méth)acrylate cationique comprend un monomère cationique ayant une forme réticulée représenté par la Formule 2 ci-dessous : 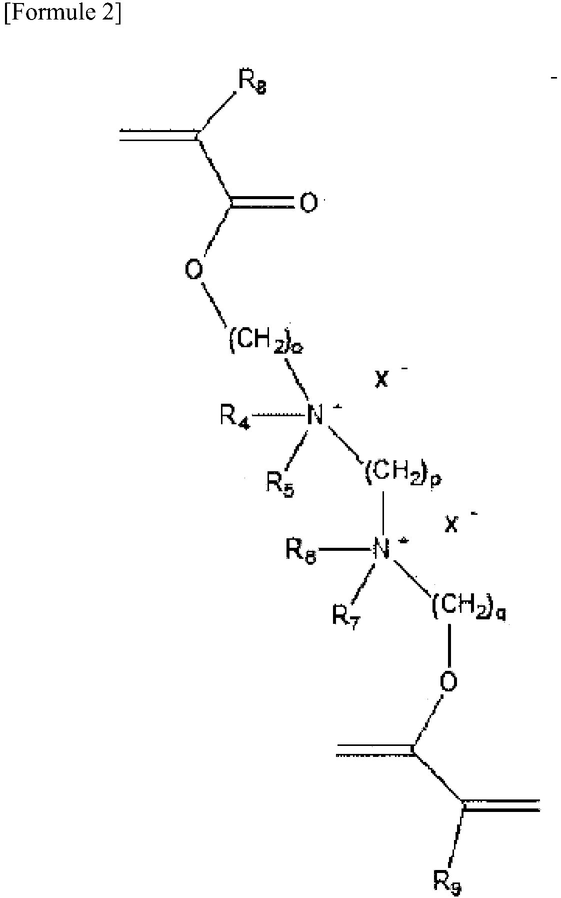
dans lequel R₄, R₅, R₆, R₇, R₈, et R₉ sont chacun indépendamment un hydrogène ou un groupe alkyle ayant 1 à 4 atomes de carbone, X est un groupe halogène ou du bistrifluorométhanesulfonylimide (TFSI), o et q sont chacun indépendamment un nombre entier de 0 à 4, et p est un nombre entier de 0 à 8.

2. Liant d'électrode positive pour la batterie rechargeable au lithium selon la revendication 1, dans lequel le cation est un ou plusieurs cations parmi un cation d'azote, un cation d'oxygène et un cation de soufre.

3. Liant d'électrode positive pour la batterie rechargeable au lithium selon la revendication 1, dans lequel le monomère à base de (méth)acrylate cationique comprend en outre un monomère cationique représenté par la Formule 1 ci-dessous : 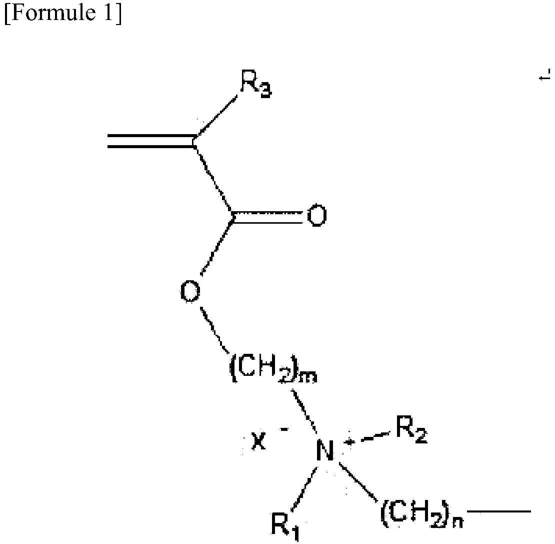 dans lequel R₁, R₂ et R₃ sont chacun indépendamment un hydrogène ou un groupe alkyle ayant 1 à 4 atomes de carbone, X est un groupe halogène ou du bistrifluorométhanesulfonylimide (TFSI), et m et n sont chacun indépendamment un nombre entier de 0 à 4.

4. Liant d'électrode positive pour la batterie rechargeable au lithium selon la revendication 3, dans lequel le monomère à base de (méth)acrylate cationique comprend un monomère cationique représenté par la Formule 1 ci-dessous et un monomère cationique ayant une forme réticulée représenté par la Formule 2 ci-dessous dans un rapport en poids de 0,5 à 2:2 à 0,5.

5. Liant d'électrode positive pour la batterie rechargeable au lithium selon la revendication 1, dans lequel le liant d'électrode positive inclut 5 à 15 % en poids d'une unité structurelle dérivée d'un monomère à base de (méth)acrylate cationique contenant au moins un cation et 85 à 95 % en poids d'un solvant par rapport au poids total du liant.

6. Liant d'électrode positive pour la batterie rechargeable au lithium selon la revendication 3, dans lequel le monomère cationique représenté par la Formule 1 ci-dessous est un monomère cationique représenté par la Formule 1a ci-dessous ou un monomère cationique représenté par la Formule 1b ci-dessous :

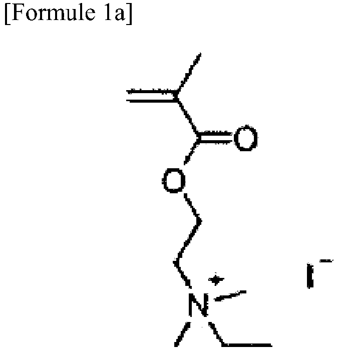

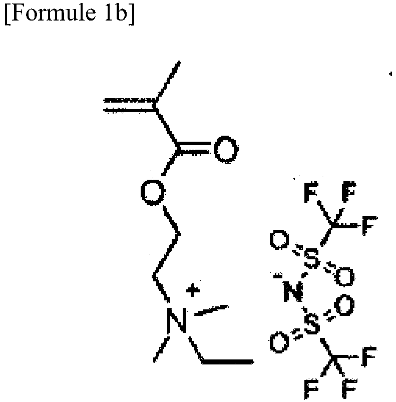

7. Liant d'électrode positive pour la batterie rechargeable au lithium selon la revendication 1, dans lequel le monomère cationique ayant une forme réticulée représenté par la Formule 2 ci-dessous est un monomère cationique ayant une forme réticulée représenté par la Formule 2a ci-dessous ou un monomère cationique ayant une forme réticulée représenté par la Formule 2b ci-dessous :

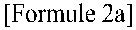

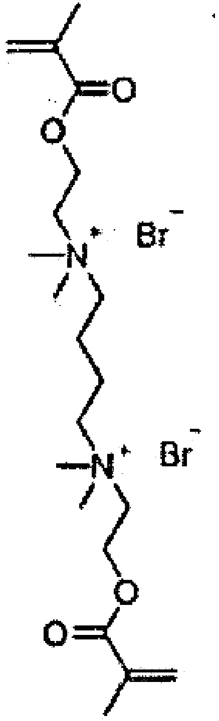

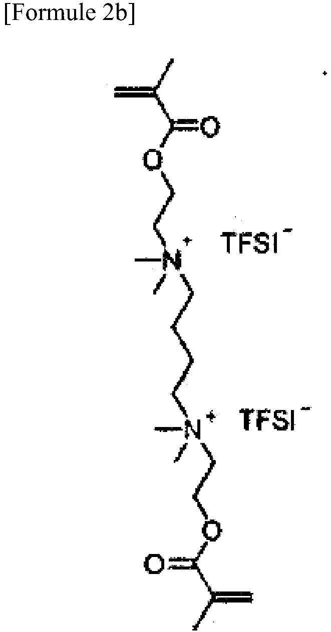

8. Électrode positive pour une batterie rechargeable au lithium comprenant le liant d'électrode positive selon 1a revendication 1 ; et un matériau actif d'électrode positive.

9. Électrode positive pour la batterie rechargeable au lithium selon la revendication 8, dans laquelle le matériau actif d'électrode positive est un composite de soufre-carbone.

10. Électrode positive pour la batterie rechargeable au lithium selon la revendication 8, dans laquelle le liant d'électrode positive est contenu dans une quantité de 1 à 50 parties en poids pour 100 parties en poids du poids total de l'électrode positive.

11. Batterie rechargeable au lithium comprenant l'électrode positive pour la batterie rechargeable au lithium selon 1a revendication 8 ; une électrode négative de métal lithium ; un électrolyte interposé entre l'électrode positive et l'électrode négative ; et un séparateur.

12. Batterie rechargeable au lithium selon la revendication 11, dans laquelle la batterie rechargeable au lithium est une batterie au lithium-soufre.
